# EUROPEAN PATENT APPLICATION

(11) **EP 2 096 524 A2**
(43) Date of publication of application: **02.09.2009**
(21) Application number: 09002733.5
(22) Date of filing: 26.02.2009
(51) Int. Cl.: G06F 3/038

(54) **Simulation of multi-point gestures with a single pointing device**

(30) Priority: 26.02.2008 US 37848
(71) Applicant: Apple Inc., Cupertino, CA 95014 (US)
(72) Inventor: Dicker, George R., Saratoga, CA 95070 (US); Van Os, Marcel, San Francisco, CA 94110 (US); Williamson, Richard, Los Gatos, CA 95033 (US); Blumenberg, Chris, San Francisco, CA 94114 (US)
(74) Representative: Lang, Johannes

(57) **Abstract**

This relates to allowing a computer system using a single pointing device to simulate multi-point gesture inputs. Simulating software can receive single pointing inputs (such as, for example, input from a mouse) and convert them to simulated multi- point gesture inputs such as finger pinches, reverse pinches, translations, rotation, and the like. The simulating software can also allow the user to use keyboard keys to give the user additional control when generating the multi- point gesture inputs.

## Description

### Field of the Invention

This relates to multi-touch gestures in general, and more specifically to simulating multi-touch gestures utilizing a single pointing input device.

### Background of the Invention

A multi-point sensor panel is a panel that can sense multiple point events at the same time. Thus, a multi-point sensor panel can, for example, sense two touch events that take place simultaneously at two different positions and caused by two fingers or other objects being pressed to the panel. Examples of multi-point sensor panels are discussed in U.S. Pat. Application No. 11/649,998, entitled "PROXIMITY AND MULTI-TOUCH SENSOR DETECTION AND DEMODULATION," filed on January 3, 2007 and hereby incorporated by reference in its entirety. As discussed in the latter application, multi-point sensor panels can include multi-touch sensor panels as well as other types of sensor panels (such as multi-proximity sensor panels). Multi-point sensor panels can be used to provide an improved user interface for various electronic devices.

One way to leverage multi-point sensor panels to provide an improved user experience is to allow users to communicate with the device using multi- point gestures. A gesture is a user input that does not merely specify a location (as is the case with an ordinary mouse click, for example), but can also specify a certain movement of an object or objects, optionally with a certain direction and velocity. For example, traditional mouse based gestures usually provide that a user press a mouse button and move the mouse according to a predefined path in order to perform a gesture. Multi-touch functionality can allow for more complex gestures to be used. For example, a user can perform a gesture by moving two or more fingers on the surface of the panel simultaneously. Multi- point gestures (and more specifically multi-touch gestures) are discussed in more detail in U.S. Pat. Application No. 10/903,964, entitled "GESTURES FOR TOUCH SENSITIVE INPUT DEVICES," filed on July 30, 2004 and hereby incorporated by reference in its entirety.

In order to obtain the full benefit of multi-touch gestures, software that runs on a multi-touch capable device may also need to be multi-touch capable. However, developing such software can be difficult. Existing computing platforms for developing software, such as ordinary personal computers and/or workstation computers, are usually not multi-touch capable. Without such capabilities, existing software development computers are usually unable to test the multi-touch capable software being developed on them.

A developer can load the software being developed on a multi-touch capable device and then test it there. However, in practice a developer may need to perform many repeated tests on different versions of the software, and having to load each version of the software to be tested on a separate device can prove to be very time consuming and can significantly slow down the development process.

### Summary of the Invention

This relates to allowing a computer system using a single pointing device to simulate multi-point gesture inputs. Simulating software can receive single pointing inputs (such as, for example, input from a mouse) and convert them to simulated multi- point gesture inputs such as finger pinches, reverse pinches, translations, rotation, and the like. The simulating software can also allow the user to use keyboard keys to give the user additional control when generating the multi- point gesture inputs.

A received single-point gesture input can be converted to a multi-point gesture input by various predefined methods. For example, a received single point gesture input can be used as a first gesture input while a second gesture input can be generated by displacing the first gesture input by a predefined vector. Alternatively, or in addition, the second gesture input can be defined as a being a gesture symmetrical to the first gesture input with respect to a predefined point. In another alternative, multiple single point gesture inputs can be consecutively received from the single pointing device and converted into a multi-point gesture input that defines an at least partially simultaneous performance of the consecutively received multiple single point inputs.

### Brief Description of the Drawings

Fig. 1 is a diagram of an exemplary device that features multi-touch gestures and an exemplary device used for developing software for that device according to one embodiment of this invention.

Fig. 2 is a diagram showing exemplary software that may run on a tester device according to one embodiment of this invention.

Figs 3A and 3B are diagrams showing exemplary schemes for defining starting locations of touches according to one embodiment of this invention.

Figs 4A and 4B are diagrams showing exemplary schemes for defining gesture movement for touches according to one embodiment of this invention.

Fig 5 is a diagram showing an exemplary scheme for defining gestures according to one embodiment of this invention.

Fig 6 is a diagram showing an exemplary scheme for defining gestures according to one embodiment of this invention.

Fig. 7 is a diagram showing several exemplary simulated multi-touch gestures that may be entered utilizing according to one embodiment of this invention.

### Detailed Description of the Preferred Embodiment

In the following description of preferred embodiments, reference is made to the accompanying drawings which form a part hereof, and in which it is shown by way of illustration specific embodiments in which the invention may be practiced. It is to be understood that other embodiments may be utilized and structural changes may be made without departing from the scope of the preferred embodiments of the present invention.

This relates to allowing a computer system using a single pointing device to simulate multi-point gesture inputs. Simulating software can receive single pointing inputs (such as, for example, input from a mouse) and convert them to simulated multi- point gesture inputs such as finger pinches, reverse pinches, translations, rotation, and the like. The simulating software can also allow the user to use keyboard keys to give the user additional control when generating the multi- point gesture inputs.

When a user enters simulated multi- point gesture inputs, the device simulator can cause markers to appear and move across the simulated subject device screen to indicate the type of touch event being performed using the mouse and keyboard (or other input devices). These markers can be, for example, small circles or other shapes representing fingertips detected on or in proximity to a multi-touch panel. The markers can then be interpreted as actual point inputs, such as the centroid of the circle, when testing multi- point software.

Although embodiments of the present invention may be described herein in terms of simulating the multi- point capabilities of portable devices, personal computers and/or workstations, it should be understood that embodiments of the invention are not limited to such devices, but are generally applicable to simulating the capabilities of any multi- point capable device on any other device. While the detailed description below centers on simulating multi-touch sensor panels, its teachings can apply to multi-point sensor panels in general.

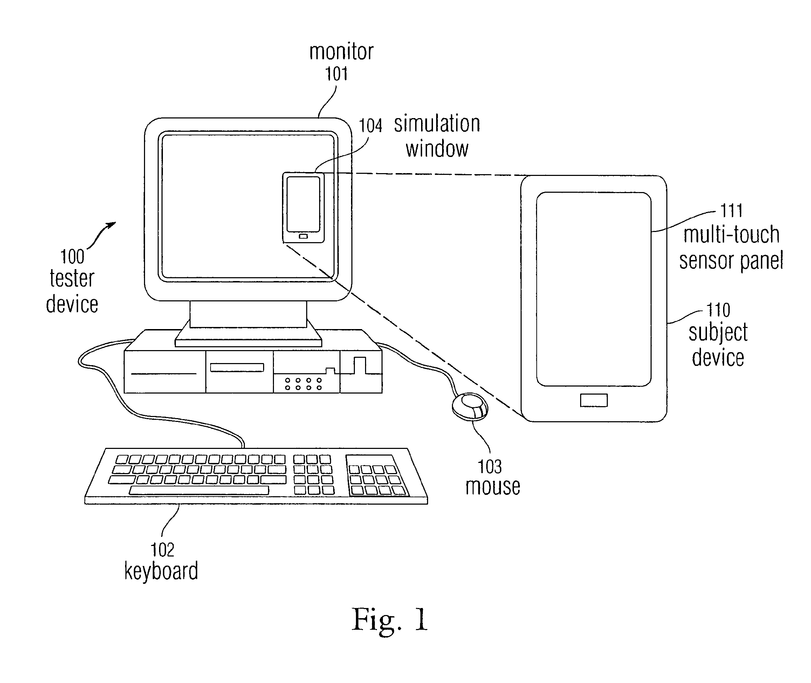

FIG. 1 is a diagram of an exemplary device (110) that may receive multi-touch gesture inputs and a device (100) that can be used for developing software for the device according to embodiments of the invention. Device 110 can be a handheld device, a notebook computer or the like. In some embodiments, device 110 can include a combination of a display and a multi touch sensor panel 111. However, in other embodiments, device 110 can include a multi-touch sensor panel without a display, such as a trackpad. In some of the latter embodiments, device 110 can also include a separate display. For example, device 110 can be a notebook computer which includes a multi-touch capable trackpad and a monitor.

Device 100 can include a monitor 101, a keyboard 102 and a mouse 103 for communicating with a user. Alternatively, the device can include other interface devices for communicating with the user. It should be noted that in the present example, device 100 includes a single pointing device (i.e., mouse 103). The mouse can be considered a single pointing device because it only allows the selection of one spatial point at a time. In contrast, a multi-touch sensor panel can be considered a multi-pointing device because it allows for multiple spatial points to be selected at a single time (e.g., by placement of two or more fingers down at two or more different points on or near the panel). Embodiments of the invention do not require that device 100 include only a single pointing device and can include multi-pointing devices. Device 100 can include a CPU and one or more memories. The one or more memories can store instructions and data, and the CPU can execute instructions stored by the memory. Thus, device 100 may execute various software, including but not limited to Software Development Kit (SDK) software.

As noted above, device 100 can be used for developing or testing software for device 110. Thus, device 100 can be referred to as a tester device and device 110 as a subject device.

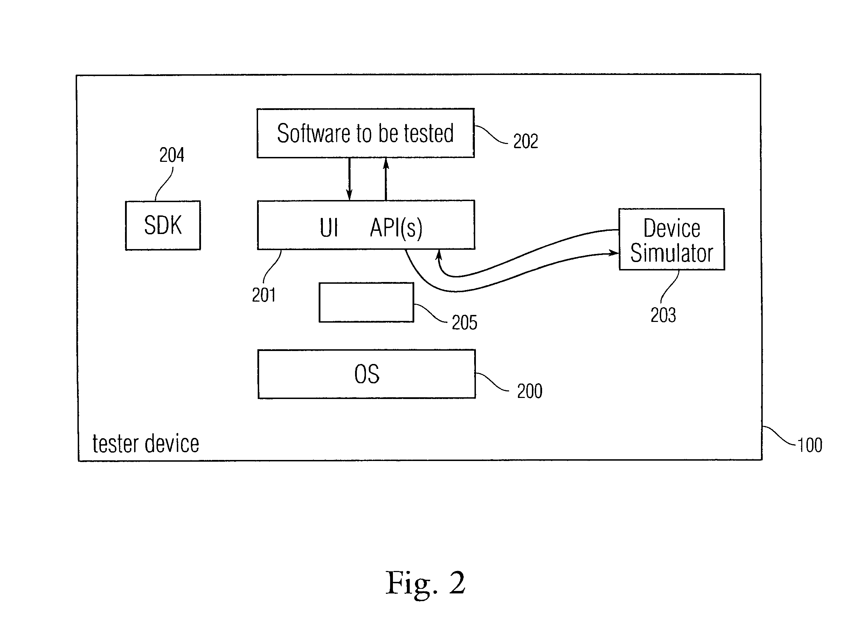

FIG. 2 is a diagram showing exemplary software that can run on a tester device according to one embodiment of the invention. The software can include an Operating System (OS 200). The software can also include User Interface Application Programming Interfaces (APIs) 201. APIs 201 can be application programming interfaces that allow programs running on the subject device (i.e., device 110) to communicate with a user. These APIs ordinarily run on subject device 110, but can be executed at device 100 for the purposes of testing software designed for device 110 at device 100. APIs 201 can be the same as corresponding APIs intended to be executed at the subject device (110). Alternatively, APIs 210 can be modified from those that execute at device 110 in order to allow for execution at a different device (device 100). However, even in the second alternative, APIs 201 can provide the same or similar interfaces to software that is using them (e.g., software 202, in the present example). Thus, for example, APIs 201 can provide the same headers to software 202 as would be provided by similar APIs running at device 110.

In some embodiments of the invention, emulation software 205 can be used to allow UI APIs 201 to run on OS 200 and device 100. In other embodiments, OS 200 and the OS running at subject device (110) may be identical or substantially similar, so that no emulation software is necessary.

Tester device 100 can also run software to be tested 202. This software can be software that is eventually intended to be run on device 110, but is presently being developed and tested on device 100. Software to be tested can use UI APIs 201 to communicate with the user. UI APIs, can provide all communications between the software to be tested and the device it is running on. As noted above, the UI APIs 201 running on the tester device can be identical or very similar to similar APIs that run on the subject device 110. Thus, UI APIs can make it appear to the software to be tested that it is actually executing at device 110. Or, in other words, the UI APIs can allow the software to be tested to use the same methods for communicating with the outside world as it would have done if it had been running at the subject device 110.

Ordinarily (i.e., when being executed at subject device 110), UI APIs 201 can communicate with lower level software and/or hardware of device 110, that may perform various user interface functions. Thus, the UI APIs can communicate with display/multi touch panel 111 of device 110 (or lower level software that controls the display/multi touch panel) in order to cause information or graphics to be displayed, and/or receive touch events indicating user input. However, if the UI APIs are being executed at device 100, they may not be able to communicate with a display/multi touch panel 111, as device 100 may not include such an element. While tester device 100 can include a display 101, it can be of a different type than the display of the subject device 110. Furthermore, device 100 need not include any multi touch sensor panel.

Thus, device simulator 203 can be used to simulate the display and/or multi touch sensor panel of device 110 at device 100. The device simulator can provide for UI APIs 201 the same type of interface(s) that these APIs would communicate with in subject device 110 in order to connect to display/multi-touch panel 111. Device simulator 203 can cause a window 104 (see Fig. 1) to be displayed at the display 101 of device 100. Device simulator can output in window 101 the same or similar graphics that would have been output by device 110, had it been running the software to be tested 202 and UI APIs 201. Thus, window 104 can be a simulation of the display of device 110.

Similarly, device simulator 203 can take in user input from a user of device 100 and convert it to a type that would have been received from a user of device 110. Thus, the device simulator can take in input provided through the interface devices of device 100 (e.g., keyboard 102 and mouse 103) and convert it to input that would have been produced by a multi-touch sensor panel. More details as to how the device simulator achieves this conversion are provided below.

In some embodiments, the device simulator can also simulate other input/output functionalities of device 110, such as sounds, a microphone, power or other buttons, a light sensor, an acceleration sensor, etc.

In some embodiments, tester device 100 and subject device 110 can use different types of processors with different instruction sets. In such cases, the software to be tested 202 and UI APIs can each include two different versions, one intended for execution at device 100 and the other at device 110. The two versions can be the results of compiling the same or similar high level code into the two different instruction sets associated with devices 100 and 110 (for the purposes of this example, high level code can include any code at a higher level than assembly and machine code). Thus, device 100 can be used to test the high level code of the software to be tested 202. This can be sufficient if the compilers for devices 100 and 110 do not introduce any errors or inconsistencies.

Software development kit (SDK) 204 can also be executed at device 100. The SDK can be used to develop the software to be tested 202. Furthermore, UI APIs (201) and device simulator (203) can be considered a part of the SDK used for the testing of software developed using the SDK. In alternative embodiments, no SDK needs to run on device 100. In these embodiments, device 100 can be used for testing purposes and not necessarily for software development.

In some embodiments, device 100 need not be used for testing or software development at all. Instead, it can be used to simply execute software intended for device 110 and provide a simulation of device 110. For example, an embodiment of the invention can be used to provide a demonstration of the operation of a multi-touch enabled device so that a user can decide whether to purchase that device.

As noted above, the simulating software can take in single pointing input, or single pointing gestures issued from the user (such as, for example, gestures input by a mouse) and convert it to multi-touch gesture inputs. The simulating software can also allow the user to use keyboard keys to give the user additional control over the resulting multi-touch gesture inputs. The conversion from user input to multi-touch gesture inputs can be performed according to predefined rules.

Ordinarily, multi-touch gestures can be performed by placement of fingers, palms, various other parts of the human body, or objects (e.g., stylus or pens) on or near a multi-touch sensor panel. Some embodiments of the present invention can allow a user to enter all of the above types of simulated gestures. One easily performed group of gestures involves placement and movement of two or more finger tips on or near the surface of a touch sensor panel.

While a user is entering simulated multi-touch gesture inputs, the device simulator 203 can cause markers to appear and move across the simulated subject device screen (i.e., window 104) to indicate to the user the type of gesture he/she is entering using the mouse and keyboard (or other interfaces of device 100). These markers can be, for example, small circles representing fingertips pressing against a multi-touch panel. The markers are discussed in more detail below.

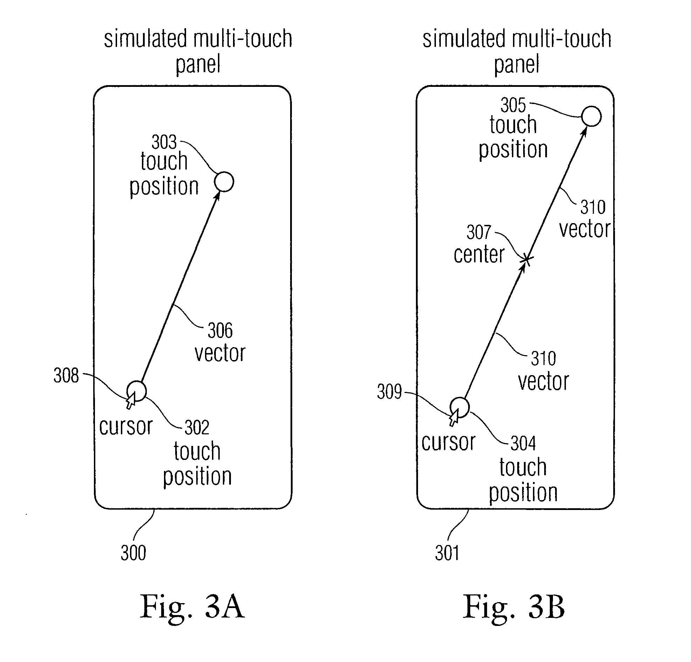

In some embodiments, a user can begin a multi-touch gesture simulation by entering a starting position. Figs 3A and 3B show two examples of entering such a position. Figs. 3A and 3B are related to gestures performed by moving two touch points, such as finger tips. Thus, a starting position defining the initial positions of two finger tips may need to be entered.

Figs 3A and 3B show simulation windows 300 and 301 which are intended to simulate the screen and/or multi touch panel of subject device 110. In some embodiments, the screen and the multi-touch panel are superimposed, so they can be shown in the same window. Thus, windows 300 and 301 can be similar to window 104 of Fig. 1.

Windows 300 and 301 show an initial placement stage of entering a gesture. The initial placement stage can be initialized in various ways, such as by pressing a keyboard key, clicking on a mouse button (not shown) or simply moving a mouse cursor over the simulation window (300 or 301). Circles 302-305 represent the positions of touch inputs. In other words, they represent the positions of virtual fingertips that are touching the simulated screen/multi-touch panel.

In a first alternative (illustrated in Fig. 3A), a first touch (302) can follow the mouse pointer (308). A second touch can be placed at a fixed predefined displacement from the first touch. For example, second touch 303 can be displaced from first touch 302 by predefined vector 306. Vector 306 can, for example, be some default value or it can be previously defined by the user. Initially, the user can move cursor 308 around window 300 and subsequently cause movements of touches 302 and 303. The user can thus find desirable positions for these touches, and indicate his/her desired initial position of the touches (this can be done by, for example, clicking a mouse button). Thus, the user can specify a desired starting position that includes two touches while only using a single pointing input device (e.g., a mouse).

In a second alternative, instead of a predefined vector 306, a predefined middle point 307 can be used. The user can again position a first touch (304) using the mouse pointer (309). In this alternative, the second touch (305) can be positioned in a mirror or symmetrical position from that of the first touch with respect to middle point 307. In other words, if the displacement from the middle point to the first touch defines vector 310, then the position of second touch 305 is such that the displacement between the second touch and the middle point defines the same vector (310). Again, the user can move the cursor around to determine a desirable position and indicate the desirable starting position (e.g., by clicking on a mouse button). Again, the middle point 307 can be entered by the user, or a default value (e.g., the middle of the window) can be used.

Various embodiments can utilize either of the above discussed alternatives for entering a starting position. Some embodiments can implement both alternatives and allow the user to choose between them (e.g., by pressing or clicking on a button).

In some embodiments, a user may switch between the two alternatives while manipulating the touches. For example, the user may start out with the Fig. 3A alternative, and displace touches 302 and 303 to a desired first set of locations. The user can then switch to the second alternative (e.g., by pressing a keyboard key). Once the second alternative is activated, the first set of locations can be used to define the middle point. For example, the middle point can be defined as the point between the locations of touches 302 and 303 of the first set of locations. Thus, the user can easily define a desired middle point and proceed to choose the starting locations using the Fig. 3B alternative.

In addition, the user can start with the Fig. 3B alternative in order to define a first set of locations for touches 304 and 305. The user can then switch to the Fig. 3A alternative. The first set of locations can be used to define the vector 306 for the Fig. 3A alternative. The user can then use the Fig. 3A alternative to define the actual initial locations.

In both alternatives, the device simulator can indicate the positioning of touches 302-304 in the simulation window by, for example, showing small semi-transparent circles indicating the positions of touches. The position of the middle point can also be indicated in the simulation window. The method of positioning shown in Fig. 3A can be referred to as parallel positioning, and the method of Fig. 3B, as mirrored positioning.

A person of skill in the art would recognize that the teachings discussed above in connection with Figs 3A and 3B can be applied for defining positions of more than two touches. For example, multiple touches can be defined as being displaced from touch 302 according to different predefined vectors. In addition, or alternatively, multiple touches can be disposed around a circle having a radius equal to the distance between touch 304 and the middle point (307). Movement of touch 304 can then move these touches by expanding, contracting or turning the circle.

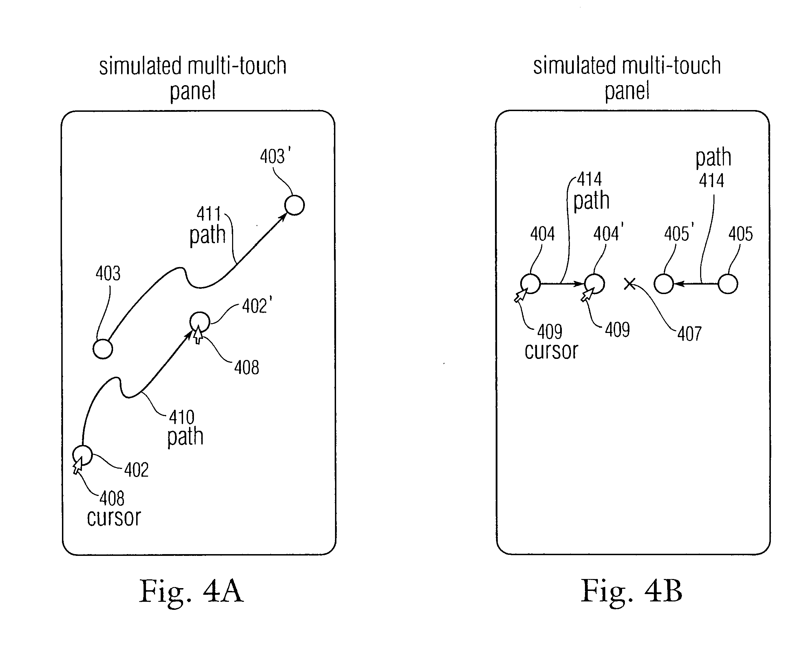

Figs 3A and 3B and the discussion above describe defining an initial position of two or more touches. However, a gesture need not be defined by only its initial position. A gesture may also require some movement from the initial position as well. Thus, a multi-touch gesture may require movement of the touches. Figs. 4A and 4B show a scheme for defining movement of touches after their initial positions have been defined.

As noted above, the desired initial position can be indicated by the user by clicking a mouse button. In some embodiments, movement can be defined by keeping the mouse button clicked (or down) while moving the mouse.

Movement can be defined in a manner similar to that of defining the initial position. Thus, Fig. 4A illustrates a scheme for defining movement that is similar to the scheme for defining an initial position shown in Fig. 3A. Accordingly, the scheme of Fig. 4A can be referred to as parallel movement definition. Positions 402 and 403 can represent the initial positions of two touches as defined by the user. As noted above, these initial positions can be entered using either or both of the methods discussed above in connection with Figs 3A and 3B. Alternatively, other methods for entering initial positions can be used. After setting the initial positions, the user can, while keeping the mouse button pressed, lead the mouse along path 410. As a result, the device simulator can lead the graphical representation of the touch that starts at position 402 along path 410 as well, until it reaches position 402'. The device simulator can also move the other touch (the one starting at position 403) along a similar path 411 until it reaches position 403'. Thus, as was the case with Fig. 3A, while one touch is being moved by the mouse cursor, the other touch is moved by the simulator so that it stays at a predefined displacement from the touch being moved by the mouse cursor. The displacement vector can be defined by the initial positioning of the touches (i.e., it can be the vector between positions 402 and 403).

One difference between the schemes of Figs 3A and 4A is that during the movement of Fig. 4A, the device simulator can track the movement of both touches, convert it into a proper data format and send it to UI APIs 201 as a gesture. On the other hand, movement during the process of Fig. 3A (e.g., before the mouse button has been pressed down) need not be tracked as that process can be used to define an initial position only and not a particular movement path.

Fig. 4B illustrates a scheme for defining movement that is similar to the scheme for defining an initial position shown in Fig. 3B. In other words, Fig. 4B may represent mirrored movement definition. In Fig. 4B, two touches start in positions 404 and 405 respectively. The touch at position 404 (the first touch) can be moved by movement of cursor 409 to position 404' along path 414. In some embodiments, the cursor is moved while the mouse button is pressed.

The device simulator can move the touch that starts at position 405 (the second touch) from position 405 to position 405' in such a manner that the position of the second touch is mirrored from that of the first touch across from middle point 407. Thus, the second touch may travel along path 415. Middle point 407 can be defined in accordance with the initial position of the two touches. Thus, it can be the middle point between initial positions 404 and 405 (as shown). Again, the device simulator can track the movement of both touches, convert it into proper data format and send it to UI APIs 201.

Some embodiments may offer both the methods of Figs 4A and 4B for defining movement and allow a user to switch between them by pressing keyboard keys. In some embodiments, the movement definition schemes of Figs 4A and 4B can be used regardless of how the initial positions were defined. Thus, for example, the initial positions of two touches can be defined according to the scheme of Fig. 3A, while the movements of the touches can be defined according to the scheme of Fig. 4B.

In some embodiments, a user can switch between the schemes of Figs 4A and 4B while in the middle of defining a gesture. Thus, part of a gesture can be defined according to the scheme of Fig. 4A and another part according to the scheme of Fig. 4B. The methods of Figs. 4A and 4B can be used to define gestures featuring more than two touches in the manner discussed above with reference to Figs 3A and 3B.

The above discussed methods can be useful for easily defining certain types of gestures that are used in certain multi-touch enabled devices. These gestures can include, for example, dragging two fingers in parallel, pinching and expanding two fingers, turning two fingers (as if turning an invisible knob), etc. However, these methods may not be able to define all possible gestures that utilize two or more fingers. This need not be an impediment, because definition of all possible gestures may not be needed. Only definition of gestures considered meaningful by the simulated device (i.e., subject device 110) and/or the software to be tested may need to be simulated.

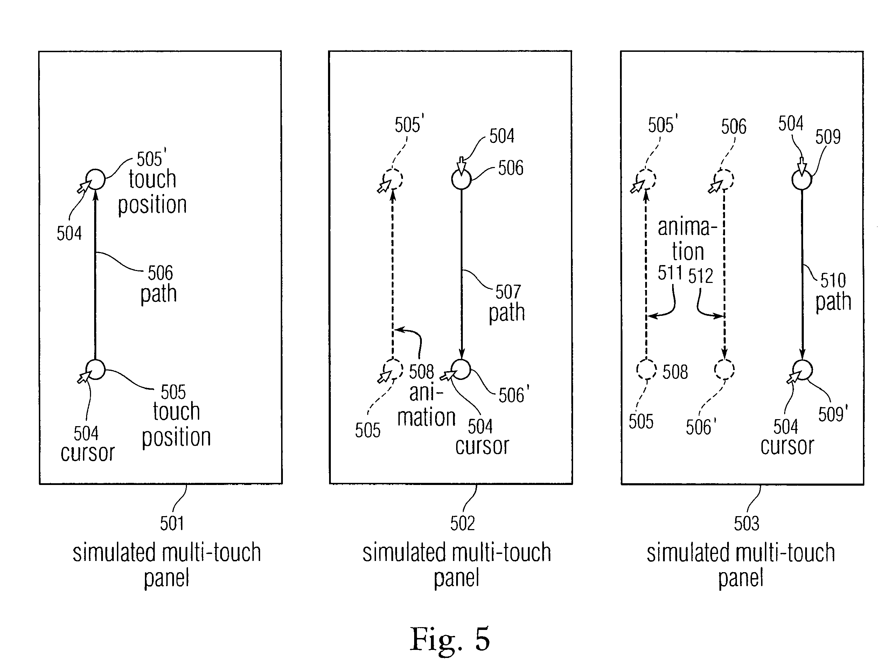

Nevertheless, Fig 5 shows another method for simulating gestures which allows for greater flexibility. The method of Fig 5 can be provided by various embodiments as an exclusive method of gesture entry or as an alternative to one or more of the methods discussed above. Fig. 5 includes screens 501, 502 and 503 which can show different stages of defining a multi touch gesture.

According to the scheme of Fig. 5, a multi touch gesture can be defined by separately defining multiple single touch gesture components. Initially a first component may be defined by moving a single touch. More specifically, an initial position 505 of a single touch can be selected by, for example, placing mouse cursor 504 at that position and pressing a mouse button. Then a gesture can be defined by, for example, moving the mouse while the mouse button is pressed and releasing the mouse button at the end of the gesture. Thus, the gesture may involve starting a touch at position 505, moving the touch along path 506 and ending it at position 505'.

Thus, one component single touch gesture of a multi-touch gesture can be defined. One or more additional components can be subsequently defined in a similar manner. For example, with reference to screen 502, a second gesture component can be defined after the first one by initially clicking the mouse at position 506 and then moving it along a path 507 to position 506'. In some embodiments, while a second or subsequent gesture component is being defined, one or more previously defined gesture components can be "played back" while the subsequent component is being defined. This can assist the user in defining the relevant component, as the gesture being defined assumes that all components are performed at least partially simultaneously. Thus, while the user is defining the second component by moving the cursor from position 506 to position 506', animation 508 of another touch being moved from position 505 to position 505' can be simultaneously displayed by the device simulator.

After the second gesture component is entered, a third gesture component can be entered. The third gesture component can involve moving a cursor from position 509 to position 509' along path 510. Similarly, animations 511 and 512 of the two previously entered gesture components can be "played back" while the third gesture component is being entered.

Embodiments of the present invention can allow any number of gesture components to be thus entered. In some embodiments, the number of gesture components that can be entered can be limited in relation to the number of fingers a user of the subject device 110 can be expected to use to enter a gesture. Various embodiments can also allow one or more erroneously entered gesture components to be re-entered or deleted.

Once the user has entered a desired number of gesture components, the user can indicate so (e.g., by clicking on a designated button). At this point the device simulator can compose a single multi touch gesture by superimposing all gesture components (i.e., performing them simultaneously). Thus, based on the components discussed in connection with Fig. 5, the device simulator can create a multi-touch gesture that involves dragging a leftmost finger up while dragging two right fingers down.

In some embodiments, the device simulator can normalize the various gesture components. More specifically, the device simulator can adjust the speed of the various components so all gesture components can begin and end simultaneously. In alternative embodiments, the speed may not be adjusted, so that some components can end before others. In still other embodiments, users can be allowed to enter gesture components that begin after other gesture components begin.

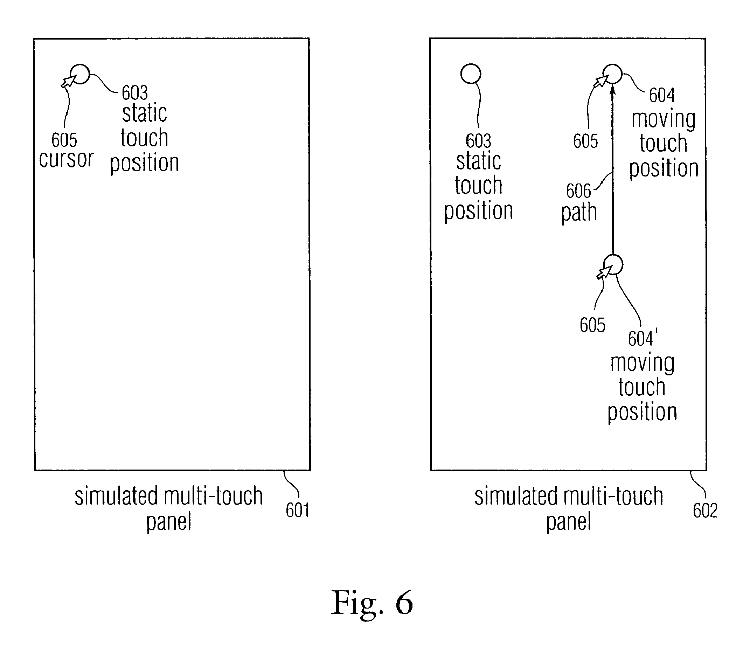

Fig 6 is a diagram of another exemplary method for defining gestures according to some embodiments of the invention. Similar to Fig. 5, elements 601 and 602 show different stages of the simulation window 104 when defining a gesture. Initially, the user can define a static touch by placing the mouse cursor 605 at position 603 and clicking a button. The user can subsequently define a moving touch by, for example, clicking on the mouse cursor at position 604 and moving the mouse cursor to position 604' along path 606. The resulting gesture may represent keeping one finger pressed at position 603 without moving it while moving another finger from position 604 to position 604' along path 605. Alternatively, the static touch can be defined after the dynamic touch or more than one static and/or dynamic touches can be defined. The method of Fig. 6 can be offered as a different mode of entering a multi-touch gesture and may be activated by a respective control key or mouse clickable button. Alternatively, the method of Fig. 6 can be executed as a specific case of the method discussed above in connection with Fig. 5.

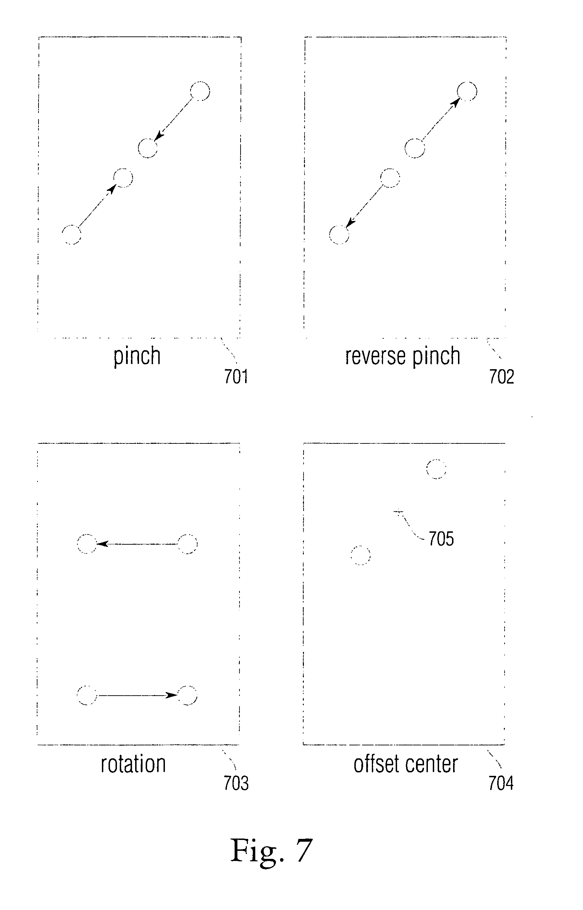

Fig. 7 is a diagram showing several exemplary simulated multi-touch gestures that may be input using a single pointing device according to some embodiments of this invention. Example 701 shows a pinch. Example 702 shows a reverse pinch. Example 703 shows a rotation. Example 704 shows a case where the center of rotation 705 is chosen at a position different than the center of the simulated panel. A person of skill in the art would recognize that all the examples of Fig. 7 can be implemented using the methods discussed above.

A person of skill in the art would recognize that, in the addition to the above, other methods for entering multi-touch gestures may be used. For example, a shape of a touch outline can be entered, by for example tracing it with a mouse or selecting from predefined choices. The shape can signify a more complex touch event than simply touching the screen with a finger tip. It can, for example, signify touching the screen with a palm, or placing an object on the screen. Once the shape has been entered, it can be moved around by moving a mouse cursor in order to define a multi-touch gesture.

While the above discussion centers on the case in which the tester device features only a single pointing device (such as a mouse), in some embodiments the tester device can feature a multi touch panel as well. For example, the tester device can be a laptop featuring a multi-touch enabled trackpad. The subject device can include a multi-touch panel that is combined with a display (thus allowing a user to enter multi-touch inputs by interacting with the surface of the display). The tester device can simulate the subject device by providing a simulation of the subjects device's display in the simulation window 104 of the tester device's monitor 101, while allowing a user of the tester device to enter multi-touch inputs using the tester device's track pad. The tester device can indicate simulated locations of touches in the simulation window (e.g., by showing small circles in the simulation window) while the user is entering touches through the touchpad.

While some of the above discussed embodiments relate to converting single point gesture inputs into multi-touch gesture inputs, the invention need not be thus limited. More generally, embodiments of the invention can relate to converting single point inputs into multi-point inputs. Multi-point inputs can include multi-touch inputs, but can also include other types of inputs such as, for example, the multi-proximity inputs discussed by U.S. Pat. Application No. 11/649,998.

Although the present invention has been fully described in connection with embodiments thereof with reference to the accompanying drawings, it is to be noted that various changes and modifications will become apparent to those skilled in the art. Such changes and modifications are to be understood as being included within the scope of the present invention as defined by the appended claims.

## Claims

1. A system for simulating multi-point input on a multi- point sensor panel, the system comprising:
a display for displaying a representation of the multi- point sensor panel;
a single pointing user input device; and
a device simulator, the device simulator configured to receive an input from the single pointing user input device and convert it into a multi-point input according to predefined conversion rules.

2. The system of claim 1, wherein the single pointing user input device is a mouse.

3. The system of claim 1, wherein the system further includes a processor configured to execute software intended to be executed at a multi- point enabled device including the sensor panel, the device simulator being further configured to send the converted multi- point input to the software in a format identical to the format in which the software would have received the multi- point input had it been executing at the multi- point enabled device.

4. The system of claim 1, wherein the input from the single pointing user input device is defined by a position of a cursor controlled by the single pointing user input device.

5. The system of claim 4, wherein the converted multi- point input is defined by at least two distinct point inputs, the first point input being defined by the position of the cursor controlled by the single pointing device and at least one other point input being defined by a position derived from the position of the cursor controlled by the single pointing device.

6. The system of claim 5, wherein the at least one other point input is defined by a path followed by a point that is displaced from the cursor controlled by the single pointing device by a predefined vector.

7. The system of claim 5, wherein the at least one other point input is defined by a position that is symmetrical to the position of the cursor controlled by the single pointing device with respect to a predefined point.

8. The system of claim 1, wherein the device simulator is configured to receive as input a plurality of single point inputs entered consecutively through the single pointing device, and to convert the plurality of single point inputs to the multi- point input by:
combining the plurality of received single point inputs into the multi- point input, so that the multi- point input represents an at least partially simultaneous performance of the plurality of single point inputs.

9. The system of claim 1, further comprising a CPU and a computer readable memory, wherein the device simulator is software stored at the computer readable memory and executed by the CPU.

10. The system of claim 9, further comprising a software development kit configured for development of software for a multi- point enabled device including the multi- point sensor panel, the software development kit being stored at the computer readable memory and executed by the CPU, the device simulator being part of the software development kit.

11. The system of claim 1, wherein the multi-point input is multi-touch input, and the multi- point sensor panel is a multi-touch sensor panel.

12. A method for simulating multi-point input comprising:
receiving a single tracking input from a single pointing device;
in response to the received single tracking input, displaying a visual representation of a simulated multi-point input, wherein the simulated multi-point input includes two or more simulated touch points and is at least partially based on the single tracking input.

13. The method of claim 12, wherein the simulated multi-point input is determined by applying predefined rules to the tracking input.

14. The method of claim 12, wherein the single pointing device is a mouse.

15. The method of claim 12, wherein the single pointing device is a single-touch trackpad.

16. A computer readable medium comprising software configured for execution at a first device, the first device comprising a single pointing user input device, the software being configured to simulate multi-point input on a multi-point sensor panel by performing the following:
receiving a single pointing input through the single pointing user input device;
generating a multi- point input based on the single pointing input according to predefined conversion rule; and
displaying the multi-point input.

17. The computer readable medium of claim 16, wherein the generating of the multi-point input and the displaying of the multi-point input are performed in real time while the single pointing input is being received.

18. The computer readable medium of claim 16, wherein the software is further configured to:
receive a control signal;
based on the control signal, select one of a plurality of predefined conversion rules as the conversion rule according to which the multi-point input is generated.

19. The computer readable medium of claim 16, wherein the single pointing user input device is a mouse.

20. The computer readable medium of claim 16, wherein a second software is being executed at the first device, the second software being intended for execution at a multi- point enabled device including the multi- point sensor panel, the software being further configured to:
send the generated multi- point input to the second software in a format identical to the format in which the second software would have received a multi-point input had it been executing at the multi- point enabled device.

21. The computer readable medium of claim 16, wherein the single pointing input is defined by the position of a cursor controlled by the single pointing device.

22. The computer readable medium of claim 19, wherein the generated multi-point input is defined by at least two distinct point inputs, the first point input being defined by the position of the cursor controlled by the single pointing device and at least one other point input being defined by a position derived from the position of the cursor controlled by the single pointing device.

23. The computer readable medium of claim 22, wherein the at least one other point input is defined by a position that is displaced from the cursor controlled by the single pointing device by a predefined vector.

24. The computer readable medium of claim 22, wherein the at least one other point is defined by a position that is symmetrical to the position of the cursor controlled by the single pointing device with respect to a predefined point.

25. The computer readable medium of claim 16, wherein the software is part of a software development kit.

26. The computer readable medium of claim 16, wherein the multi-point input is multi-touch input, and the multi- point sensor panel is a multi-touch sensor panel.

27. A system for simulating multi-point gestures on a multi- point sensor panel, the system comprising:
a display for displaying a representation of the multi- point sensor panel;
a single pointing user input device; and
a device simulator, the device simulator configured to receive an input from the single pointing user input device and convert it into a multi-point gesture input according to predefined conversion rules.

28. The system of claim 27, wherein the single pointing user input device is a mouse.

29. The system of claim 27, wherein the system further includes a processor configured to execute software intended to be executed at a multi- point enabled device including the sensor panel, the device simulator being further configured to send the converted multi- point gesture input to the software in a format identical to the format in which the software would have received the multi- point gesture input had it been executing at the multi- point enabled device.

30. The system of claim 27, wherein the input from the single pointing user input device is defined by a path followed by a cursor controlled by the single pointing user input device.

31. The system of claim 30, wherein the converted multi- point gesture input is defined by at least two distinct point gesture inputs, the first point gesture input being defined by the path followed by the cursor controlled by the single pointing device and at least one other point gesture input being defined by a path derived from the path followed by the cursor controlled by the single pointing device.

32. The system of claim 31, wherein the at least one other point gesture input is defined by a path followed by a point that is displaced from the cursor controlled by the single pointing device by a predefined vector.

33. The system of claim 31, wherein the at least one other point gesture is defined by a path followed by a point that is in a position symmetrical to the position of the cursor controlled by the single pointing device with respect to a predefined point.

34. The system of claim 27, wherein the device simulator is configured to receive as input a plurality of single point gesture inputs entered consecutively through the single pointing device, and to convert the plurality of single point gesture inputs to the multi- point gesture input by:
combining the plurality of received single point gesture inputs into the multi-point gesture input, so that the multi- point gesture input represents an at least partially simultaneous performance of a plurality of single point gestures defined by the plurality of single point gesture inputs.

35. The system of claim 27, further comprising a CPU and a computer readable memory, wherein the device simulator is software stored at the computer readable memory and executed by the CPU.

36. The system of claim 35, further comprising a software development kit configured for development of software for a multi- point enabled device including the multi- point sensor panel, the software development kit being stored at the computer readable memory and executed by the CPU, the device simulator being part of the software development kit.

37. The system of claim 27, wherein the multi-point gestures are multi-touch gestures, the multi- point sensor panel is a multi-touch sensor panel and the multi-point gesture input is a multi-touch gesture input.

38. A method for simulating multi-point gestures comprising:
receiving a single tracking input from a single pointing device;
in response to the received single tracking input, displaying a visual representation of a simulated multi-point gesture, wherein the simulated multi-point gesture includes two or more simulated touch points and is at least partially based on the single tracking input.

39. The method of claim 38, further comprising:
receiving an initial positioning command from the single pointing device; and
displaying an initial position for two or more simulated touch points before the receipt of the single tracking input.

40. The method of claim 38, wherein the simulated multi-point gesture is determined by applying predefined rules to the tracking input.

41. The method of claim 38, wherein the single pointing device is a mouse.

42. The method of claim 38, wherein the single pointing device is a single-touch trackpad.

43. A computer readable medium comprising software configured for execution at a first device, the first device comprising a single pointing user input device, the software being configured to simulate multi-point gestures on a multi- point sensor panel by performing the following:
receiving a single pointing gesture through the single pointing user input device;
generating a multi- point gesture based on the single pointing gesture according to predefined conversion rule; and
displaying the multi-point gesture.

44. The computer readable medium of claim 43, wherein the generating of the multi-point gesture and the displaying of the multi-point gesture are performed in real time while the single pointing gesture is being received.

45. The computer readable medium of claim 43, wherein the software is further configured to:
receive a control signal;
based on the control signal, select one of a plurality of predefined conversion rules as the conversion rule according to which the multi-point gesture is generated.

46. The computer readable medium of claim 43, wherein the single pointing user input device is a mouse.

47. The computer readable medium of claim 43, wherein a second software is being executed at the first device, the second software being intended for execution at a multi- point enabled device including the multi- point sensor panel, the software being further configured to:
send the generated multi- point gesture to the second software in a format identical to the format in which the second software would have received a multi- point gesture had it been executing at the multi- point enabled device.

48. The computer readable medium of claim 43, wherein the single pointing gesture is defined by a path followed by a cursor controlled by the single pointing device.

49. The computer readable medium of claim 44, wherein the generated multi-point gesture is defined by at least two distinct point gestures, the first point gesture being defined by the path followed by the cursor controlled by the single pointing device and at least one other point gesture being defined by a path derived from the path followed by the cursor controlled by the single pointing device.

50. The computer readable medium of claim 49, wherein the at least one other point gesture is defined by a path followed by a point that is displaced from the cursor controlled by the single pointing device by a predefined vector.

51. The computer readable medium of claim 49, wherein the at least one other point gesture is defined by a path followed by a point that is in a position symmetrical to the position of the cursor controlled by the single pointing device with respect to a predefined point.

52. The computer readable medium of claim 43, wherein the software is part of a software development kit.

53. The computer readable medium of claim 43, wherein the multi-point gestures are multi-touch gestures, the multi- point sensor panel is a multi-touch sensor panel and the multi-point gesture input is a multi-touch gesture input.
